# EUROPÄISCHE PATENTANMELDUNG

(11) **EP 3 309 314 A1**
(43) Veröffentlichungstag der Anmeldung: **18.04.2018**
(21) Anmeldenummer: 17405021.1
(22) Anmeldetag: 16.10.2017
(51) Int. Cl.: E04B 9/02, E04B 9/04, E04B 9/34, F24F 7/10, F24F 13/06, F24D 3/16

(54) **DECKENELEMENT SOWIE HEIZ- UND KÜHLDECKE**

(30) Priorität: 17.10.2016 CH 13822016
(71) Anmelder: Barcol-Air Group AG, 8603 Schwerzendbach (CH)
(72) Erfinder: Djordjevic, Bojan, 9242 Oberuzwil (CH)
(74) Vertreter: Wagner, Wolfgang Heribert

(57) **Zusammenfassung**

Die Erfindung betrifft ein Deckenelement sowie eine Heiz- und Kühldecke. Das Deckenelement weist eine Lochplatte (1) auf, die an der Oberseite einen Anschlusskasten (3) mit einem Anschluss (4) trägt, über welchen zum Kühlen eines Raumes länglichen Luftkästen (5) Luft zugeführt werden kann, die z.T. durch die Lochplatte (1) hindurch in den Raum austritt. Gerade Abschnitte (7) einer Flüssigkeitsleitung sind mit Wärmeleitschienen (8), die mit der Lochplatte (1) verklebt sind, verschweisst. Die Luftkästen (5) weisen ausserdem Ausblasöffnungen (10) oberhalb der Lochplatte (1) auf, die als parallel schräg nach oben weisende Düsen ausgebildet sind. Die Deckenelemente sind vorzugsweise seitlich voneinander beabstandet und mit einem Abstand von mindestens 5cm unterhalb einer Raumdecke aufgehängt. Beim Kühlen des Raumes treibt dann die aus den Ausblasöffnungen (10) austretende Kühlluft eine Raumluftwalze, welche konvektiv mit den flüssigkeitsgekühlten Lochplatten (1) Wärme austauscht, was die Kühlleistung wesentlich erhöht. Beim Heizen des Raumes ist die Wirkung entsprechend.

## Beschreibung

### Technisches Gebiet

Die Erfindung betrifft ein Deckenelement für eine Heiz- und Kühldecke sowie eine Heiz- und Kühldecke, welche derartige Deckenelemente umfasst. Solche Heiz- und Kühldecken werden zum Heizen und vor allem zum Kühlen von Räumen eingesetzt.

### Stand der Technik

Ein gattungsgemässes Deckenelement und eine entsprechende Heiz- und Kühldecke sind aus EP 1 586 823 A2 bekannt. Bei der Heiz- und Kühldecke sind die Deckelemente aneinander grenzend angeordnet, sodass sie die Raumdecke lückenlos bedecken.

Aus EP 2 811 232 A1 ist ein Deckenelement bekannt mit einem Luftkasten, der an der Oberseite seitlich gerichtete Ausblasöffnungen zwischen an die Raumdecke stossenden längsverlaufenden Stegen aufweist sowie eine aus solchen Deckenelementen bestehende Heiz- und Kühldecke. Da das Deckenelement an die Raumdecke anschliesst, kann sich trotz der seitlich gerichteten Ausblasöffnungen vor allem längs der Raumdecke keine wirksame Strömung ausbilden, da die Deckenelemente selbst als Hindernisse wirken.

### Darstellung der Erfindung

Der Erfindung liegt die Aufgabe zu Grunde, das bekannte Deckenelement und die bekannte Heiz- und Kühldecke insofern zu verbessern, als die Heiz- und vor allem die Kühlleistung erhöht wird, ohne dass dafür unerwünschte Zugerscheinungen in Kauf genommen werden müssten.

Diese Aufgabe wird durch die Merkmale in den Ansprüchen gelöst.

Durch die oberhalb der Lochplatte angeordneten Ausblasöffnungen kann eine starke Luftströmung im Deckenbereich und, wenn die Ausblasöffnungen aller Deckenelemente wenigstens überwiegend nach der selben Seite gerichtet oder geneigt sind, eine Raumluftwalze erzeugt werden, zumal sich die Luftströmung längs der Raumdecke ungehindert ausbreiten kann, da die Deckenelemente von der Raumdecke beabstandet sind und sie nicht behindern. Dadurch wird die Kühlung oder Heizung sehr wirksam verstärkt, ohne dass die Luftströmung als Zugluft empfunden würde, was insbesondere beim Kühlen sonst leicht eintritt.

Sehr günstig ist es auch, wenn die Ausblasöffnungen von der Lochplatte weg nach oben gerichtet sind, da dann die meist aus Beton bestehende Raumdecke besonders stark gekühlt oder geheizt und ihre thermische Speicherfähigkeit wirksam genutzt wird.

Von Vorteil ist auch, wenn die Deckenelemente nicht die ganze Raumdecke bedecken, sondern nur einen Teil davon, etwa indem sie in seitlich voneinander beabstandeten Reihen angeordnet sind, da dann die Raumluftwalze sich frei entfalten kann und ausserdem eine direkte Strahlungswechselwirkung zwischen der Raumdecke und dem zu kühlenden oder zu heizenden Raum möglich ist.

Wenn an der Oberseite der Lochplatte eine Flüssigkeitsleitung angeordnet ist, so kann die Heiz- oder Kühlwirkung nochmals deutlich verstärkt werden, da die Raumluftwalze eine starke konvektive Aufheizung bzw. Abkühlung der Raumluft an der Flüssigkeitsleitung und vor allem der thermisch eng an sie gekoppelten Lochplatte ermöglicht. Die Lochplatte heizt bzw. kühlt den Raum zusätzlich durch Strahlungsaustausch.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine Draufsicht auf ein erfindungsgemässes Deckenelement,
- Fig. 2: einen Schnitt durch das erfindungsgemässe Deckenelement von Fig. 1 längs II-II, und
- Fig. 3: schematisch einen Querschnitt durch einen Raum mit einer erfindungsgemässen Heiz- und Kühldecke.

### Wege zur Ausführung der Erfindung

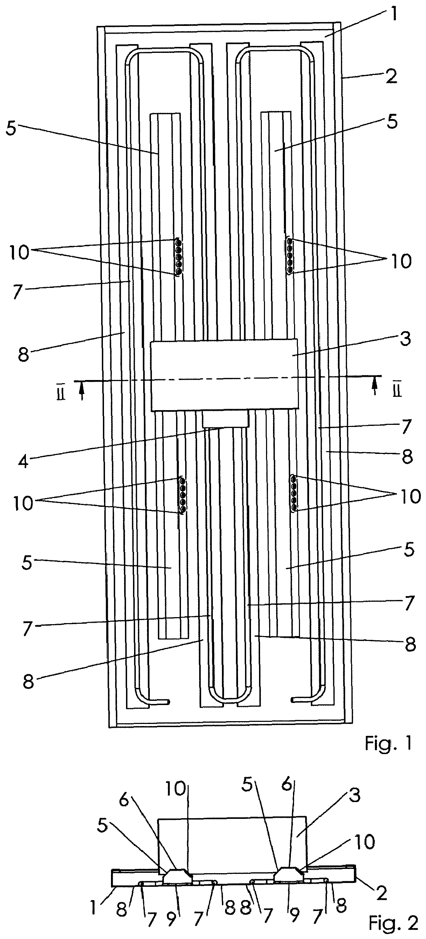

Das Deckenelement weist (Fig. 1, 2) eine rechteckige Lochplatte 1 auf mit einer ebenen Unterseite, die im Einsatz gegen den zu heizenden oder zu kühlenden Raum weist. An ihren Rand schliesst ein umlaufender nach oben weisender Flansch 2 an, der an seinem oberen Rand nach innen umgebördelt ist. Die Lochplatte 1 kann an der Oberseite mit einem Akustikvlies bedeckt sein, welches mit der Lochplatte 1 verklebt ist. Das Akustikvlies kann aber auch weggelassen werden, insbesondere, wenn die Perforierungen der Lochplatte als Mikroperforierungen mit Durchmessern von 1mm oder weniger ausgebildet sind und der Lochanteil verhältnismässig klein ist, d.h. etwa 3% oder weniger beträgt. Die Länge der Lochplatte liegt vorzugsweise zwischen 0,8m und 3m, ihre Breite zwischen 0,2m und 1,5m.

An der Oberseite trägt die Lochplatte 1 eine als Hohlkörper ausgebildete Luftzuführung, welche einen Anschlusskasten 3 umfasst mit einem Anschluss 4 für einen Schlauch, durch den Luft zugeführt werden kann, sowie zwei längliche Luftkästen 5, die jeweils leistenförmig ausgebildet sind und sich parallel über den grössten Teil der Länge der Lochplatte 1 erstrecken. Der mittig angeordnete Anschlusskasten 3 sitzt auf den Luftkästen 5 auf und ist dort über Verbindungsöffnungen 6 an den Oberseiten der Luftkästen 5 mit denselben verbunden.

Ausserdem ist eine mäanderförmige Flüssigkeitsleitung, gewöhnlich ein Rohr aus gut wärmeleitendem Material wie Kupfer, vorgesehen, mit geraden Abschnitten 7, die zwischen und neben den Luftkästen 5 angeordnet und an den Enden durch querverlaufende Verbindungsstücke verbunden sind. Jeder der geraden Abschnitte 7 ist zur Herstellung einer gut wärmeleitenden Verbindung mit der Lochplatte 1 mit der Oberseite einer geraden Wärmeleitschiene 8, die als dünne Aluminiumplatte ausgebildet ist und auf der Oberseite der Lochplatte 1 aufliegt und mit ihr verklebt ist, verschweisst. Durch die Flüssigkeitsleitung wird im Einsatz eine Heiz- oder Kühlflüssigkeit geleitet, gewöhnlich Wasser oder Sole.

Die Luftkästen sind jeweils an der Unterseite offen, sodass sie dort eine sich über ihre ganze Länge erstreckende Ausströmöffnung 9 aufweisen, durch die Luft durch gegebenfalls das Akustikvlies und durch die Perforierungen der Lochplatte 1 nach unten in den Raum fliessen kann.

Zur Erhöhung insbesondere der Kühlleistung ist jeder der Luftkästen 5 mit oberhalb der Lochplatte 1 angeordneten Ausblasöffnungen 10 versehen. Sie bilden jeweils eine an einem schräg nach oben weisenden seitlichen Streifen an der Oberseite des Luftkastens 5 angeordnete Reihe von in Längsrichtung unmittelbar aufeinanderfolgenden Düsen, welche entsprechend schräg nach oben, d.h. im Einsatz schräg von der Lochplatte 1 weg gegen eine Raumdecke gerichtet sind. Sie sind also quer zur Längsrichtung des Deckenelements geneigt. Die Düsen sämtlicher Luftkästen 5 sind dabei parallel ausgerichtet, sodass die aus ihnen austretenden Luftströme parallel sind. Das Deckenelement ist mit einer Aufhängung, gewöhnlich einer Aufhängevorrichtung aus Metall, die z.B. als Stange, Band oder Profil ausgebildet ist, versehen, mittels derer es an der Raumdecke befestigt werden kann, und zwar derart, dass die sonstigen Teile des Deckenelements einen Abstand von mindestens 5cm, vorzugsweise mindestens 10cm, z.B. 20cm von der Raumdecke hat. In der Regel beträgt der Abstand höchstens 100cm.

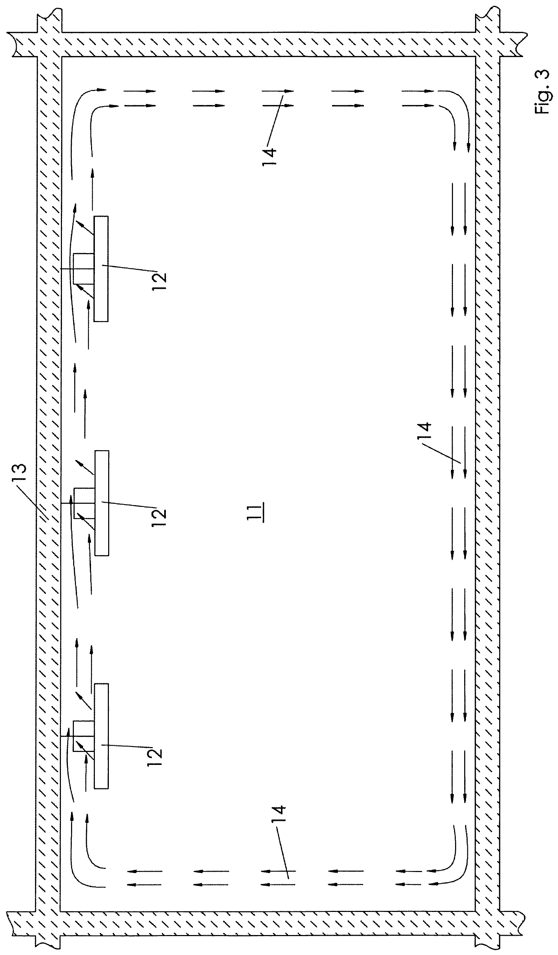

In Fig. 3 ist eine vorzugsweise Ausbildung einer Heiz- und Kühldecke aus erfindungsgemässen Deckenelementen in einem Raum 11 gezeigt. Die Deckenelemente sind dabei in Reihen 12 angeordnet, bei denen sie in Längsrichtung unmittelbar aufeinanderfolgen und die seitlich voneinander beabstandet sind, so dass sie zwischen 30% und 70%, vorzugsweise ca. 40% einer den Raum 11 nach oben abschliessenden Raumdecke 13 bedecken. Die Reihen 12 der Deckenelemente sind jeweils als Segel eingesetzt, d.h. sie sind jeweils mittels ihrer Aufhängungevorrichtungen so an der Raumdecke 13 befestigt, dass ihre sonstigen Teile mit vorzugsweise gleichem Abstand von derselben unterhalb der Raumdecke 13 hängen.

Beim Einsatz der Heiz- und Kühldecke zum Kühlen des Raumes 11 wird den Anschlüssen 4 der Deckenelemente jeweils Kühlluft zugeführt und durch die Flüssigkeitsleitungen Kühlflüssigkeit geleitet. Ein gewisser Anteil der zugeführten Kühlluft, z.B. zwischen 10% und 30%, strömt dabei durch die Ausblasöffnungen 10 aus. Dadurch wird eine Luftströmung im Deckenbereich erzeugt, welche zur Ausbildung einer den ganzen Raum erfassenden, weitgehend laminaren Raumluftwalze 14 führt. Bei diesem Strömungsmuster wird die Luftströmung gewöhnlich nicht als störende Zugluft empfunden, während die konvektive Abkühlung der Luft an den Deckenelementen sehr ausgeprägt und wirksam ist.

Auch der Wärmeaustausch mit der Raumdecke 13 wird durch die Luftströmung im Deckenbereich verstärkt, was durch die Richtung des Luftstroms aus den Ausblasöffnungen 10 schräg nach oben, derart, dass Kühlluft direkt gegen die Raumdecke 13 geleitet wird, unterstützt wird. Die thermische Speicherfähigkeit des Betons kann so noch besser genutzt werden. Wegen der Aufhängung der Deckenelemente mit Abstand unterhalb der Raumdecke 13 wird die Ausbildung der Raumluftwalze 14, insbesondere des Teils, der einen an der Raumdecke entlangstreichenden Luftstrom bildet, durch die Deckenelemente nicht wesentlich behindert. Dass die Deckenelemente nur einen Teil der Raumdecke 13 bedecken, erleichtert ebenfalls die Ausbildung der Raumluftwalze 14 und verstärkt ihre Wirkung. Ausserdem erlaubt dieser Umstand eine direkte Strahlungswechselwirkung der Raumdecke 13 mit dem zu kühlenden Raum.

Die Wirkung ist besonders ausgeprägt, wenn wie dargestellt die Ausströmöffnungen 10 sämtlicher Deckenelemente parallel gerichtet, insbesondere nach der selben Seite gerichtet oder geneigt sind, da sich dann eine geschlossene, weitgehend laminare Raumluftwalze 14 ausbildet. Die Kühlluft kann daher mit geringer Untertemperatur oder sogar isotherm zugeführt werden, da sich die zirkulierende Raumluft an den wassergekühlten Deckenelementen abkühlt.

Die Raumluftwalze bewirkt nämlich eine starke Abkühlung der Luft an den Deckenelementen, insbesondere an den durch die Kühlflüssigkeit gekühlten Lochplatten 1, durch konvektiven Wärmeaustausch. Die Kühlwirkung der durch die Lochplatten 1 hindurch in den Raum absinkenden Kühlluft und der vor allem durch die Kühlflüssigkeit gekühlten Lochplatten 1 durch Strahlungsaustausch mit dem Raum 11 wird so wesentlich ergänzt und verstärkt.

Wird die Heiz- und Kühldecke zum Heizen eingesetzt, sind die oben beschriebenen Wirkungen entsprechend.

Es sind bedeutende Abweichungen von der dargestellten Ausführung möglich, ohne dass der Bereich der Erfindung verlassen würde. So müssen die Ausblasöffnungen eines Deckenelements oder aller Deckenelemente einer Heiz- und Kühldecke nicht durchwegs nach der selben Seite gerichtet oder geneigt sein, doch sollen sie dies mindestens überwiegend sein, derart, dass sich wie oben beschrieben eine Raumluftwalze ausbildet. Die Ausblasöffnungen können auch anders angeordnet und über die Luftzuführung verteilt sein als dargestellt. Sie brauchen auch nicht als Düsen ausgebildet zu sein, doch ist dies von Vorteil, weil eine durch die Wirkung der Düsen beschleunigte Ausströmung besonders geeignet ist, eine die Raumluft breiter erfassende Strömung anzutreiben. Die Luftzuführung kann einen einzigen Luftkasten oder mehr als zwei Luftkästen aufweisen oder überhaupt anders gestaltet sein.

Die Wärmeleitschienen können auch dicker ausgebildet sein und an der Oberseite eine Nut aufweisen, in welche die Flüssigkeitsleitung eingepresst ist. Andererseits kann die Flüssigkeitsleitung auch direkt auf der Lochplatte aufliegen, eventuell von einem sie gegen die Lochplatte drückenden gebogenen Blechstreifen bedeckt, der beidseits der Flüssigkeitsleitung mit der Lochplatte verschweisst ist. Die Flüssigkeitsleitung kann aber auch als Register von Kunststoffschläuchen ausgebildet sein, die auf der Lochplatte aufliegen usw..

Die Deckenelemente können auch anders als dargestellt angeordnet sein. So können sie etwa eine inselartig geschlossene Heiz- und Kühldecke bilden, wobei vorzugsweise mindestens an den seitlichen Rändern jeweils ein Spalt frei bleibt, der die Ausbildung einer ausreichenden Luftströmung, insbesondere einer Raumluftwalze, begünstigt.

### Bezugszeichenliste

- 1: Lochplatte
- 2: Flansch
- 3: Anschlusskasten der Luftzuführung
- 4: Anschluss
- 5: Luftkasten
- 6: Verbindungsöffnung
- 7: gerader Abschnitt der Flüssigkeitsleitung
- 8: Wärmeleitschiene
- 9: Ausströmöffnung
- 10: Ausblasöffnung
- 11: Raum
- 12: Reihe von Deckenelementen
- 13: Raumdecke
- 14: Raumluftwalze

## Patentansprüche

1. Deckenelement für eine Heiz- und Kühldecke, mit einer Lochplatte (1) sowie mit einer an einer Oberseite der Lochplatte (1) angeordneten, mit einem Luftanschluss (4) versehenen, als Hohlkörper ausgebildeten Luftzuführung, welche mit einer Unterseite, an welcher sie mit mindestens einer Ausströmöffnung (9) versehen ist, auf der Lochplatte (1) aufliegt, **dadurch gekennzeichnet, dass** die mindestens eine Luftzuleitung mindestens eine oberhalb der Lochplatte (1) angeordnete, quer zu einer Längsrichtung des Deckenelements gerichtete oder geneigte Ausblasöffnung (10) aufweist und das Deckenelement mit einer Aufhängung zur Befestigung desselben an einer Raumdecke (13) derart, dass seine übrigen Teile von der Raumdecke (13) beabstandet sind, versehen ist.

2. Deckenelement nach Anspruch 1, **dadurch gekennzeichnet, dass** die Aufhängung so ausgebildet ist, dass die übrigen Teile des Deckenelements um mindestens 5cm von der Raumdecke (13) beabstandet ist.

3. Deckenelement nach Anspruch 2, **dadurch gekennzeichnet, dass** die Aufhängung so ausgebildet ist, dass die übrigen Teile des Deckenelements um mindestens 10cm von der Raumdecke (13) beabstandet ist.

4. Deckenelement nach einem der Ansprüche 1 bis 3, **dadurch gekennzeichnet, dass** die Luftzuleitung mehrere Ausblasöffnungen (10) aufweist, welche jeweils nach der selben Seite des Deckenelements gerichtet oder geneigt sind.

5. Deckenelement nach einem der Ansprüche 1 bis 4, **dadurch gekennzeichnet, dass** die mindestens eine Ausblasöffnung (10) von der Lochplatte (1) weg schräg nach oben gerichtet ist.

6. Deckenelement nach einem der Ansprüche 1 bis 5, **dadurch gekennzeichnet, dass** die Ausblasöffnungen (10) als Düsen ausgebildet sind.

7. Deckelement nach einem der Ansprüche 1 bis 6, **dadurch gekennzeichnet, dass** die Luftzuführung einen Anschlusskasten (3) umfasst, welcher den Luftanschluss (4) trägt sowie mindestens einen an einer Unterseite offenen, mit dem Anschlusskasten (3) verbundenen Luftkasten (5), welcher sich in Längsrichtung des Deckenelements längs der Lochplatte (1) erstreckt.

8. Deckenelement nach Anspruch 7, **dadurch gekennzeichnet, dass** der Anschlusskasten (3) etwa mittig angeordnet ist.

9. Deckenelement nach Anspruch 7 oder 8, **dadurch gekennzeichnet, dass** die Luftzuführung mindestens zwei mit Abstand parallel zueinander angeordnete Luftkästen (5) umfasst.

10. Deckenelement nach einem der Ansprüche 7 bis 9, **dadurch gekennzeichnet, dass** der mindestens eine Luftkasten (5) mindestens eine Gruppe von in Längsrichtung aufeinanderfolgenden Ausblasöffnungen (10) trägt.

11. Deckelement nach einem der Ansprüche 1 bis 10, **dadurch gekennzeichnet, dass** es mindestens eine an der Oberseite der Lochplatte (1) angeordnete Flüssigkeitsleitung aufweist.

12. Deckenelement nach Anspruch 11, **dadurch gekennzeichnet, dass** die Flüssigkeitsleitung mehrere parallel zu den Luftkästen (5) verlaufende, neben oder zwischen denselben angeordnete gerade Abschnitte (7) umfasst.

13. Heiz- und Kühldecke, welche mehrere mit Abstand unterhalb einer Raumdecke (13) angeordnete Deckenelemente gemäss einem der Ansprüche 1 bis 12 umfasst, wobei die Deckenelemente jeweils mit seitlichen Abständen zueinander angeordnet sind, derart, dass sie höchstens 70% der Raumdecke (13) bedecken.

14. Heiz- und Kühldecke nach Anspruch 13, **dadurch gekennzeichnet, dass** die Deckelemente mindestens 30% der Raumdecke (13) bedecken.

15. Heiz- und Kühldecke nach Anspruch 13 oder 14, **dadurch gekennzeichnet, dass** die Ausblasöffnungen (10) der Luftzuführungen aller Deckenelemente mindestens überwiegend nach der selben Seite gerichtet oder geneigt sind.
